# EUROPÄISCHE PATENTANMELDUNG

(11) **EP 4 835 695 A1**
(43) Veröffentlichungstag der Anmeldung: **04.11.2026**
(21) Anmeldenummer: 25173958.7
(22) Anmeldetag: 02.05.2025
(51) Int. Cl.: G06F 18/214, G06V 10/774, G06V 10/82, G06V 20/70

(54) **VERFAHREN ZUM ERZEUGEN ANNOTIERTER SENSORDATEN**

(71) Anmelder: SICK AG, 79183 Waldkirch (DE)
(72) Erfinder: WITTMEIER, Steffen, 79183 Waldkirch (DE)
(74) Vertreter: Manitz Finsterwald Patent- und Rechtsanwaltspartnerschaft mbB

(57) **Zusammenfassung**

Es wird ein Verfahren zur Erzeugung annotierter Sensordaten vorgeschlagen, welches umfasst: dass mittels eines realen Sensors reale Sensordaten über eine Umgebung des realen Sensors erzeugt werden, in der sich ein oder mehrere reale Bezugsobjekte befinden können; dass anhand eines Modells der Umgebung, das einen virtuellen Sensor umfasst, der dem realen Sensor entspricht, sowie für jedes der in der Umgebung befindlichen realen Bezugsobjekte ein dem jeweiligen realen Bezugsobjekt entsprechendes virtuelles Bezugsobjekt umfasst, synthetische Sensordaten über die Umgebung erzeugt werden; dass die synthetischen Sensordaten anhand des Modells im Hinblick darauf annotiert werden, ob sie sich auf eines der virtuellen Bezugsobjekte beziehen; und dass auf Grundlage der annotierten synthetischen Sensordaten die realen Sensordaten annotiert werden.

## Beschreibung

Die Erfindung betrifft ein Verfahren zum Erzeugen annotierter Sensordaten.

Im Allgemeinen sind Sensoren dazu ausgebildet, Informationen einer dem jeweiligen Sensortyp entsprechenden Art über eine Umgebung des jeweiligen Sensors, insbesondere über einen definierten Detektionsbereich des jeweiligen Sensors innerhalb dieser Umgebung, zu erfassen und Sensordaten zu erzeugen und auszugeben, die diese Informationen repräsentieren. Die von dem jeweiligen Sensor ausgegebenen Sensordaten können anschließend auf verschiedene Weisen verwendet werden.

Dabei ist es oftmals erforderlich, die Sensordaten zunächst auszuwerten. Das Auswerten kann beispielsweise eine Klassifizierung und/oder Segmentierung von Objekten in den Sensordaten umfassen. Insbesondere kann das Auswerten umfassen, dass eine Zuordnung zwischen einem jeweiligen Teilbereich der Sensordaten und einem jeweiligen Objekt und/oder einer oder mehreren Eigenschaften, wie etwa einer Objektklasse, des jeweiligen Objekts erfolgen. Beispiele hierfür sind etwa die Detektion und Klassifizierung von Objekten in Bilddaten mittels sogenannter Bounding Boxes sowie die Generierung von Segmentierungsmasken, die verschiedene Abschnitte innerhalb der Bilddaten jeweiligen Objekten bzw. Objektklassen oder auch einem Hintergrund, d. h. einem Raumbereich ohne (erfasstes) Objekt, zuordnen.

Das Ergebnis der Auswertung kann den Sensordaten als sogenannte Annotation hinzugefügt werden. Die Sensordaten und die Annotation bilden dann gemeinsam annotierte Sensordaten, die im Rahmen verschiedener Applikationen verwendet werden können, wobei jeweils das Ergebnis der erfolgten Auswertung als zusätzliche Information vorliegt. Annotierte Sensordaten können beispielsweise im Rahmen von Verfahren der Künstlichen Intelligenz (KI) nützlich sein. Dort können sie insbesondere als sogenannte Ground Truth für ein Training und/oder eine Validierung eines Kl-Algorithmus verwendet werden.

Speziell in automatisierten Prozessen ist eine zuverlässige semantische Interpretation von Sensordaten oftmals eine essenzielle Voraussetzung. Wenn die Sensordaten im Rahmen einer Automatisierung genutzt werden sollen, ist es dabei zweckmäßig, dass auch schon die Auswertung der Sensordaten automatisiert erfolgt.

Bekannte Verfahren gehen dabei für die Auswertung der Sensordaten, beispielsweise für eine Klassifizierung oder Segmentierung, in der Regel von den Sensordaten selbst als Ausgangspunkt aus. Zum Beispiel kann auf Sensordaten, bei denen es sich um Bilddaten handelt, ein maschinelles Netz angewandt werden, um basierend auf den Bilddaten eine Klassifizierung von einzelnen Objekten durchzuführen und für jedes klassifizierte Objekt eine zweidimensionale Bounding Box sowie die Objektklasse des jeweiligen Objekts auszugeben. Ein solches maschinelles Netz kann beispielsweise als Deep Convolutional Neural Network, etwa nach dem YOLO-Ansatz (You Only Look Once), ausgebildet sein. Derartige Verfahren der Künstlichen Intelligenz können in vielen Bereichen eine zufriedenstellende Performance erzielen; in der Regel ist der rechentechnische Aufwand solcher vergleichsweise komplexer Methoden allerdings sehr hoch. Darüber hinaus gibt es aktuell noch keine standardisierten Verfahren zum Einsatz von Kl-Verfahren, wie etwa eines Deep Convolutional Neural Network, im Zusammenhang mit sicherheitskritischen Funktionen. Dazu wäre es erforderlich, eine verlässlichere Grundlage für die Auswertung der Sensordaten zu haben.

Insbesondere in einem industriellen Umfeld, in dem eine Automatisierung erfolgen soll, kann über die Information, die sich mittels des jeweiligen Sensors über dessen Umgebung erfassen lässt, hinaus ein a-priori-Wissen über diese Umgebung vorliegen, das allerdings ungenutzt bleibt, wenn der Auswertung der Sensordaten nur die Sensordaten selbst zugrunde gelegt werden. Die Berücksichtigung eines solchen a-priori-Wissens bei der Auswertung der Sensordaten kann aber die Verlässlichkeit der Auswertung erhöhen und somit unter Umständen auch eine Verwendung von auf diese Weise annotierten Sensordaten für sicherheitskritische Funktionen ermöglichen.

Es ist eine Aufgabe der Erfindung, ein Verfahren bereitzustellen, das auf besonders zuverlässige Weise annotierte Sensordaten erzeugt.

Die Aufgabe wird gelöst durch ein Verfahren zum Erzeugen annotierter Sensordaten mit den Merkmalen des Anspruchs 1. Vorteilhafte Weiterbildungen ergeben sich aus den Unteransprüchen, der vorliegenden Beschreibung sowie den Figuren.

Das erfindungsgemäße Verfahren umfasst: dass mittels eines realen Sensors reale Sensordaten über eine Umgebung des realen Sensors erzeugt werden, in der sich ein oder mehrere reale Bezugsobjekte befinden können; dass anhand eines Modells der Umgebung, das einen virtuellen Sensor umfasst, der dem realen Sensor entspricht, sowie für jedes der in der Umgebung befindlichen realen Bezugsobjekte ein dem jeweiligen realen Bezugsobjekt entsprechendes virtuelles Bezugsobjekt umfasst, synthetische Sensordaten über die Umgebung erzeugt werden; dass die synthetischen Sensordaten anhand des Modells im Hinblick darauf annotiert werden, ob sie sich auf eines der virtuellen Bezugsobjekte beziehen (und gegebenenfalls vorzugsweise auch auf welches); und dass auf Grundlage der annotierten synthetischen Sensordaten die realen Sensordaten annotiert werden.

Der reale Sensor ist dazu ausgebildet, reale Sensordaten über eine Umgebung des realen Sensors zu erzeugen. Dazu kann der reale Sensor Informationen über zumindest einen Teilbereich der Umgebung, nämlich einen Detektionsbereich des realen Sensors, erfassen und reale Sensordaten erzeugen, die diese Informationen repräsentieren. Insofern, als die realen Sensordaten die Informationen über den Detektionsbereich des realen Sensors repräsentieren, handelt es sich bei den realen Sensordaten um Sensordaten über die Umgebung des realen Sensors. Die Art der realen Sensordaten hängt dabei von der Art des jeweiligen realen Sensors ab.

Bei dem realen Sensor kann es sich beispielsweise um einen optischen Sensor, insbesondere um einen optischen Perzeptions-Sensor, handeln, der ein zweidimensionales Abbild eines Detektionsbereichs des Sensors innerhalb einer Umgebung des Sensors erzeugt. Ein solches Abbild kann einen von dem realen Sensor erzeugten realen Sensordatensatz bilden. Die von dem realen Sensor erzeugten realen Sensordaten können einen oder mehrere solcher realer Sensordatensätze umfassen. Der reale Sensor kann beispielsweise als Kamera ausgebildet sein und ein schwarzweißes oder farbiges Abbild des Detektionsbereichs erzeugen; alternativ dazu kann der reale Sensor beispielsweise als ToF- (Time-of-Flight) oder Li-DAR-Sensor zur Messung von Abständen ausgebildet sein und als Abbild des Detektionsbereichs eine Tiefenkarte erzeugen. Die realen Sensordaten können folglich beispielsweise in Form eines oder mehrerer realer Sensordatensätze aus gegebenenfalls farbigen Bildpunkten bzw. Abständen vorliegen. Der reale Sensor kann aber auch auf andere Weise ausgebildet sein, so dass die realen Sensordaten in anderer Form vorliegen.

Die genannte Umgebung des realen Sensors umfasst den realen Sensor selbst sowie Objekte, die sich in der Umgebung befinden können. Insbesondere kann die Umgebung ein oder mehrere reale Bezugsobjekte umfassen. Dabei kann es sich um Objekte handeln, auf die sich das Annotieren der Sensordaten beziehen soll.

Ob sich ein jeweiliges reales Bezugsobjekt tatsächlich in der Umgebung befindet, ist vorab nicht festgelegt. Das Verfahren kann grundsätzlich unabhängig davon durchgeführt werden, ob und gegebenenfalls welche realen Bezugsobjekte sich in der Umgebung des realen Sensors befinden; allerdings hängt das Ergebnis des Verfahrens, nämlich die annotierten Sensordaten, hiervon ab.

Dem Erzeugen annotierter Sensordaten werden bei dem erfindungsgemäßen Verfahren nicht nur die von dem realen Sensor erzeugten realen Sensordaten zugrunde gelegt, sondern zusätzlich dazu ein a-priori-Wissen über die Umgebung des realen Sensors nämlich in Form eines Modells der Umgebung. Dabei kann es sich insbesondere um ein räumliches, vorzugsweise dreidimensionales, Modell der Umgebung handeln, das vorzugsweise computerimplementiert ist. Ein solches Modell kann für die Durchführung des Verfahrens bereits vorliegen, so dass es für das Verfahren lediglich noch bereitgestellt wird. Das Verfahren kann aber auch umfassen, dass das Modell erst erzeugt wird, wobei das Erzeugen des Modells vorzugsweise vor dem Erzeugen der realen Sensordaten erfolgt, aber auch erst nachträglich erfolgen kann.

Grundsätzlich kann das Verfahren zum Erzeugen annotierter Sensordaten unabhängig davon sein, auf welche Weise das Modell erzeugt wird oder erzeugt worden ist. Speziell im Rahmen industrieller Automatisierung ist es nicht ungewöhnlich, dass umfassende Informationen über eine Umgebung vorliegen, in der eine jeweilige Applikation erfolgt. Diese Informationen können insbesondere die räumliche Struktur der Umgebung umfassen sowie die Position und/oder Ausrichtung von Objekten, die sich in der Umgebung befinden können. Dabei können die Informationen auch dynamisch sein, also einen zeitlichen Bezug aufweisen oder aktuell gehalten werden, um auch Veränderungen innerhalb der Umgebung (zum Beispiel Änderungen der räumlichen Struktur und/oder Bewegungen eines oder mehrerer der Objekte) zu umfassen. Basierend auf diesen Informationen kann dann das Modell der Umgebung erzeugt werden, wobei das Modell entsprechend den Informationen dynamisch sein kann und vorzugsweise ist.

Dass das Modell den virtuellen Sensor umfasst, kann insbesondere umfassen, dass das Modell Informationen über die Maße, die (aktuelle) Position und/oder die (aktuelle) Ausrichtung des realen Sensors innerhalb der Umgebung sowie darüber umfasst, auf welchen jeweiligen Messort innerhalb des Detektionsbereichs des realen Sensors sich die von dem realen Sensor erzeugten realen Sensordaten jeweils beziehen. Dass das Modell ein jeweiliges virtuelles Bezugsobjekt umfasst, kann insbesondere umfassen, dass das Modell Informationen über die Maße, die (aktuelle) Position und/oder die (aktuelle) Ausrichtung des jeweiligen entsprechenden realen Bezugsobjekts innerhalb der Umgebung umfasst. Das Modell kann insbesondere einen sogenannten digitalen Zwilling der Umgebung des realen Sensors darstellen. Der von dem Modell umfasste virtuelle Sensor und die von dem Modell gegebenenfalls umfassten virtuellen Bezugsobjekte können dann jeweils einen digitalen Zwilling des realen Sensors bzw. des jeweiligen realen Bezugsobjekts darstellen.

Der virtuelle Sensor entspricht dem realen Sensor insofern, als er innerhalb des Modells den realen Sensor repräsentiert und dabei zumindest hinsichtlich einiger für das Erzeugen der synthetischen Sensordaten wesentlicher Eigenschaften dem realen Sensor entsprechend ausgebildet ist. Das kann insbesondere umfassen, dass ein dem Detektionsbereich des realen Sensors entsprechender Detektionsbereich des virtuellen Sensors im Rahmen des Modells auf dieselbe Weise auf einen synthetischen Sensordatensatz abgebildet wird, wie der Detektionsbereich des realen Sensors von diesem auf einen realen Sensordatensatz abgebildet wird. Bei dieser Abbildung kann es sich insbesondere um eine geometrische Projektion eines dreidimensionalen Raums (Detektionsbereich) auf eine zweidimensionale Fläche (Sensordatensatz, zum Beispiel Bild oder Matrix) handeln. Dagegen braucht der virtuelle Sensor dem realen Sensor nicht unbedingt hinsichtlich des Erfassens von Messwerten zu entsprechen. Durch das Modell braucht also nicht unbedingt das physikalische Messprinzip des realen Sensors simuliert zu werden. Vielmehr kann es ausreichen, dass die synthetischen Sensordaten den realen Sensordaten hinsichtlich ihrer Struktur und der Art entsprechen, in der sie den Detektionsbereich des virtuellen bzw. realen Sensors abbilden (d. h. in der die synthetischen bzw. realen Sensordaten einem jeweiligen Messort innerhalb des Detektionsbereichs des virtuellen bzw. realen Sensors zugeordnet sind, beispielsweise durch die genannte geometrische Projektion). Darüber hinaus ist nicht unbedingt wesentlich, in welcher Weise die synthetischen Sensordaten anhand des Modells der Umgebung erzeugt werden.

Zwar werden die synthetischen Sensordaten vorzugweise in der genannten Hinsicht (insbesondere zumindest hinsichtlich der Zuordnung der Sensordaten zu einem jeweiligen Messort) auf entsprechende Weise wie die realen Sensordaten erzeugt. Bevorzugt werden die synthetischen Sensordaten jedoch (zumindest inhaltlich, d. h. in Bezug auf die konkreten Werte, die die jeweiligen Sensordaten aufweisen) unabhängig von den realen Sensordaten erzeugt. Insbesondere fließen die von dem realen Sensor erzeugten realen Sensordaten vorzugsweise weder in das Modell noch in die Erzeugung der synthetischen Sensordaten anhand des Modells ein.

Die Bezeichnung des realen Sensors und der realen Bezugsobjekte als real dient vor allem einer begrifflichen Unterscheidung des realen Sensors und der realen Bezugsobjekte von dem virtuellen Sensor bzw. den virtuellen Bezugsobjekten, die Teil des genannten Modells der Umgebung des realen Sensors sind. Im Unterschied zu dem virtuellen Sensor und den virtuellen Bezugsobjekten handelt es sich bei dem realen Sensor und den realen Bezugsobjekten jeweils um einen real existierenden Gegenstand. Auch die Bezeichnung der realen Sensordaten und realer Sensordatensätze als real dient vor allem einer begrifflichen Unterscheidung der realen Sensordaten und der realen Sensordatensätze von den synthetischen Sensordaten bzw. synthetischen Sensordatensätzen. Dabei sind die realen Sensordaten und realen Sensordatensätze nicht unbedingt realer (gegenständlicher) als die synthetischen Sensordaten bzw. synthetischen Sensordatensätze, sondern es wird durch die jeweilige Bezeichnung zum Ausdruck gebracht, dass die realen Sensordaten bzw. realen Sensordatensätze von dem realen Sensor erzeugt werden oder worden sind, wohingegen die synthetischen Sensordaten bzw. synthetischen Sensordatensätze anhand des den virtuellen Sensor umfassenden Modells erzeugt werden oder worden sind.

Die anhand des Modells der Umgebung erzeugten synthetischen Sensordaten werden im Hinblick darauf annotiert, ob sie sich auf eines der virtuellen Bezugsobjekte beziehen. Vorzugsweise werden sie, wenn sie sich auf eines der virtuellen Bezugsobjekt beziehen, außerdem im Hinblick darauf annotiert, auf welches und/oder auf was für ein virtuelles Bezugsobjekt sie sich beziehen. Das Annotieren umfasst mit anderen Worten, dass den synthetischen Sensordaten Informationen darüber hinzugefügt wird, welche synthetischen Sensordaten sich einem jeweiligen der virtuellen Objekte zuordnen lassen. Dass sich synthetische Sensordaten auf ein jeweiliges der virtuellen Bezugsobjekte beziehen, kann dabei insbesondere meinen, dass der virtuelle Sensor das jeweilige virtuelle Bezugsobjekt auf diese synthetischen Sensordaten abbildet (projiziert) und zwar in entsprechender Weise wie der reale Sensor das dem jeweiligen virtuellen Bezugsobjekt entsprechende reale Bezugsobjekt auf die realen Sensordaten abbildet (projiziert). Da diese Information vorteilhafter Weise in dem Modell der Umgebung enthalten ist, kann sie für ein zuverlässiges Annotieren der synthetischen Sensordaten herangezogen werden.

Die durch das Annotieren den synthetischen Sensordaten hinzugefügte Information kann in Form einer Klassifizierung oder Segmentierung der synthetischen Sensordaten vorliegen. Im Falle einer Klassifizierung kann den synthetischen Sensordaten eine jeweilige Objektklasse zugeordnet sein; vorzugsweise wird synthetischen Sensordaten, die sich auf ein jeweiliges der virtuellen Bezugsobjekte beziehen, eine bestimmte Objektklasse zugeordnet, die für alle virtuellen Bezugsobjekte gleich sein oder sich für verschiedene virtuelle Bezugsobjekte unterscheiden kann (insbesondere kann die zugeordnete Objektklasse zu einer jeweiligen Objektklasse des realen Bezugsobjekt, dem das jeweilige virtuelle Bezugsobjekt entspricht, identisch sein), und wird synthetischen Sensordaten, die keinem der virtuellen Bezugsobjekte entsprechen, entweder keine oder eine Objektklasse zugeordnet, die einem Hintergrund der Umgebung entspricht. Im Falle einer Segmentierung kann die Information in Form von Grenzen zwischen verschiedenen Teilbereichen der synthetischen Sensordaten vorliegen, die sich auf verschiedene der virtuellen Bezugsobjekte beziehen. Die annotierten synthetischen Sensordaten können somit eine Art Annotationsmaske bilden, die dann auf die realen Sensordaten angewandt werden kann.

Das Verfahren umfasst ferner, dass auf Grundlage der annotierten synthetischen Sensordaten die realen Sensordaten annotiert werden. Mit anderen Worten wird die Annotation der synthetischen Sensordaten letztlich auf die realen Sensordaten übertragen. Dabei sind verschiedene Weisen denkbar, auf die die realen Sensordaten auf Grundlage der annotierten synthetischen Sensordaten annotiert werden können.

Besonders einfach kann ein solches Übertragen der Annotation der synthetischen Sensordaten auf die realen Sensordaten erfolgen, wenn die realen Sensordaten und die synthetischen Sensordaten gleich strukturiert sind, beispielsweise durch einen realen Sensordatensatz bzw. einen synthetischen Sensordatensatz gebildet werden, die gleich viele und auf gleiche Weise (z. B. in Zeilen und Spalten) angeordnete Dateneinträge umfassen. Denn dann kann die den synthetischen Sensordaten als Annotation hinzugefügte Information eins zu eins (von einem jeweiligen Dateneintrag des annotierten synthetischen Sensordatensatzes auf den jeweils entsprechenden Dateneintrag des realen Sensordatensatzes) den realen Sensordaten als Annotation hinzugefügt werden. Die Dateneinträge des realen Sensordatensatzes können dann jeweils zusätzlich zu dem jeweiligen Messwert auch einen jeweiligen Annotationswert enthalten.

Allerdings müssen die realen Sensordaten und die synthetischen Sensordaten nicht unbedingt genau gleich strukturiert sein. Denn das Übertragen der Annotation der synthetischen Sensordaten auf die realen Sensordaten kann auch dann erfolgen, wenn sich die realen Sensordaten und die synthetischen Sensordaten hinsichtlich ihrer Struktur unterscheiden, es aber eine eindeutige Zuordnung der synthetischen Sensordaten zu den realen Sensordaten gibt, gemäß der die synthetischen Sensordaten den realen Sensordaten entsprechen. Beispielsweise können die realen Sensordaten und die synthetischen Sensordaten jeweils einen realen Sensordatensatz bzw. einen synthetischen Sensordatensatz umfassen, der (nach Art einer Matrix) mehrere in Zeilen und Spalten angeordnete Dateneinträge umfasst, wobei sich die realen Sensordaten und die synthetischen Sensordaten jedoch hinsichtlich der Anzahl der Zeilen und Spalten und somit der Anzahl der Dateneinträge (mit anderen Worten: hinsichtlich ihrer jeweiligen räumlichen Auflösung) unterscheiden, wobei sich aber die Dateneinträge des synthetischen Sensordatensatzes anhand ihrer jeweiligen relativen Position innerhalb des synthetischen Sensordatensatzes eindeutig einem oder mehreren Dateneinträgen des realen Sensordatensatzes zuordnen lassen, die zumindest annähernd dieselbe relative Position innerhalb des realen Sensordatensatzes aufweisen.

Auf welche konkrete Weise die realen Sensordaten auf Grundlage der annotierten synthetischen Sensordaten annotiert werden (gemäß welcher Zuordnung zwischen den synthetischen Sensordaten und den realen Sensordaten die Annotation der synthetischen Sensordaten auf die realen Sensordaten übertragen wird), ist nicht unbedingt wesentlich. Wichtig ist vielmehr, dass das Annotieren der realen Sensoren überhaupt auf den annotierten synthetischen Sensordaten beruht. Dadurch fließt das in dem Modell enthaltene a-priori-Wissen in das Annotieren der realen Sensordaten ein, wodurch das Erzeugen der annotierten Sensordaten besonders zuverlässig wird. Vorzugsweise beruht das Annotieren der realen Sensordaten zudem nicht auf den realen Sensordaten selbst, so dass die in den realen Sensordaten enthaltenen von dem realen Sensor gemessenen Messwerte nicht in das Annotieren einfließen und die Annotation somit von diesen Messwerten unabhängig ist. Auch das trägt zur Zuverlässigkeit des Erzeugens annotierter Sensordaten bei. Insgesamt kann somit durch das erfindungsgemäße Verfahren eine Zuverlässigkeit erreicht werden, die die Verwendung der als Ergebnis des Verfahrens erhaltenen annotierten Sensordaten auch in sicherheitskritischen Funktionen möglich macht.

Insbesondere kann das Verfahren ferner umfassen, dass die erzeugten annotierten (realen) Sensordaten anschließend zur Steuerung einer Industrieanlage, beispielsweise einer Produktionsanlage, verwendet werden. Insofern kann es sich bei dem Verfahren auch um ein Verfahren zur Steuerung einer Industrieanlage handeln, das als Teil dieses Verfahrens ein Verfahren zum Erzeugen annotierter Sensordaten umfasst. Bei dem genannten Umfeld des realen Sensors kann es sich dann um die Industrieanlage oder um einen Teilbereich der Industrieanlage handeln. Ferner ist es denkbar, dass zumindest eines oder mehrere der realen Bezugsobjekte steuerbare Elemente, beispielsweise bewegliche Maschinen, der Industrieanlage sind, die dann in Abhängigkeit von den erzeugten annotierten Sensordaten angesteuert werden. Es kann aber auch vorgesehen sein, dass ein oder mehrere sonstige steuerbare Elemente der Industrieanlage in Abhängigkeit von den erzeugten annotierten Sensordaten angesteuert werden.

Gemäß einer vorteilhaften Ausführungsform umfasst das Erzeugen der realen Sensordaten, dass mittels des realen Sensors für einen oder mehrere Messorte innerhalb eines Detektionsbereichs des realen Sensors jeweils ein Messwert gemessen wird und dass (insgesamt, für alle Messorte zusammen) ein realer Sensordatensatz erzeugt wird, der für jeden der Messorte einen dem jeweiligen Messort zugeordneten Dateneintrag mit dem für den jeweiligen Messort gemessenen Messwert umfasst.

Bei dem Detektionsbereich des realen Sensors kann es sich insbesondere um ein Sichtfeld des realen Sensors handeln, also um denjenigen Bereich innerhalb der Umgebung des realen Sensors, der von dem realen Sensor erfasst werden kann. Für wie viele Messorte innerhalb des Detektionsbereich ein jeweiliger Messwert gemessen wird, kann insbesondere von der Auflösung des realen Sensors abhängen, mit der der reale Sensor seinen Detektionsbereich erfassen kann. Insofern kann die Anzahl der Messorte durch die Auflösung des realen Sensors bestimmt oder jedenfalls begrenzt sein.

Die Messorte müssen nicht unbedingt punktuell sein, sondern können ausgedehnt sein, insbesondere einem jeweiligen Blickwinkelbereich des realen Sensors entsprechen. Vorzugsweise sind die Messorte zueinander disjunkt. Grundsätzlich ist es aber auch möglich, dass zueinander benachbarte Messorte einander überlappen. Idealerweise decken alle Messorte gemeinsam den gesamten Detektionsbereich ab. Unabhängig davon sind die Messorte vorzugsweise regelmäßig über den Detektionsbereich verteilt.

Die Art der an den Messorten gemessenen Messwerte hängt dabei von der Art des realen Sensors ab. Wenn es sich bei dem realen Sensor beispielsweise um einen Abstandssensor handelt, können die Messwerte insbesondere mittels des realen Sensors innerhalb des Detektionsbereichs des realen Sensors gemessene Abstände sein. Unabhängig von der Art der Messung und der gemessenen Messgröße wird auf Grundlage der durchgeführten Messungen dann der genannte reale Sensordatensatz erzeugt.

Der reale Sensordatensatz umfasst eine der Anzahl der Messorte entsprechende Anzahl von Dateneinträgen, die jeweils den Messwert enthalten, der an demjenigen Messort gemessen worden ist, dem der jeweilige Dateneintrag zugeordnet ist. Es besteht also eine eindeutige Zuordnung der Dateneinträge zu einem jeweiligen der Messorte. Durch diese Zuordnung wird der Detektionsbereich des realen Sensors auf den realen Sensordatensatz abgebildet, was insbesondere einer Projektion des (dreidimensionalen) Detektionsbereichs auf den (zweidimensionalen) realen Sensordatensatz entsprechen kann. Der reale Sensordatensatz kann beispielsweise ein Bild (des Detektionsbereichs des realen Sensors) oder eine Matrix sein, dessen/deren Dateneinträge in Zeilen und Spalten angeordnet sind.

Gemäß einer weiteren vorteilhaften Ausführungsform umfasst das Erzeugen der synthetischen Sensordaten, dass anhand des Modells ein synthetischer Sensordatensatz erzeugt wird, der für einen oder mehrere Messorte innerhalb eines Detektionsbereichs des virtuellen Sensors, der einem (nämlich dem genannten) Detektionsbereich des realen Sensors entspricht, jeweils einen dem jeweiligen Messort zugeordneten Dateneintrag umfasst. Demnach können die synthetischen Sensordaten grundsätzlich in einer Weise ausgebildet sein, die der vorstehend beschriebenen Ausbildung der realen Sensordaten entspricht.

Der Detektionsbereich des virtuellen Sensors entspricht dem Detektionsbereich des realen Sensors dabei vorzugsweise hinsichtlich seiner Maße, Position und Ausrichtung relativ zu dem jeweiligen Sensor, so dass es sich bei dem Detektionsbereich des virtuellen Sensors entsprechend dem Detektionsbereich des realen Sensors um ein Sichtfeld des virtuellen Sensors handeln kann. Grundsätzlich müssen das Sichtfeld des realen Sensors und das Sichtfeld des virtuellen Sensors allerdings nicht unbedingt exakt identisch sein, solange sie einander überlappen; vorzugsweise ist das Sichtfeld des realen Sensors dabei kleiner und in dem Sichtfeld des virtuellen Sensors vollständig enthalten, so dass der Detektionsbereich des virtuellen Sensors zumindest einem Teilbereich dem Detektionsbereich des realen Sensors entspricht.

Wie der reale Sensordatensatz umfasst auch der synthetische Sensordatensatz Dateneinträge, die jeweils einem jeweiligen Messort innerhalb des Detektionsbereichs des virtuellen Sensors zugeordnet sind. Die Messorte, denen ein jeweiliger Dateneintrag des synthetischen Sensordatensatzes zugeordnet ist, können hinsichtlich ihrer Anzahl, ihrer Position und ihrer räumlichen Ausdehnung jeweils einem jeweiligen der genannten Messorte innerhalb des Detektionsbereichs des realen Sensors entsprechen, für die der reale Sensor jeweils einen Messwerte misst. Das ist aber nicht zwingend der Fall. Insofern kann sich die Auflösung des virtuellen Sensors von der Auflösung des realen Sensors unterscheiden.

Ferner brauchen im Unterschied zu dem Erzeugen der realen Sensordaten für das Erzeugen der synthetischen Sensordaten innerhalb des jeweiligen Detektionsbereichs keine Messungen durchgeführt bzw. simuliert zu werden. Denn die Dateneinträge des synthetischen Sensordatensatzes brauchen für das Annotieren der synthetischen Sensordaten nicht unbedingt einen den Messwerten der Dateneinträge des realen Sensordatensatzes entsprechende oder überhaupt irgendwelche Werte zu enthalten, sondern können auch (jedenfalls zunächst) leer sein. Es ist aber auch nicht ausgeschlossen, dass sie Werte enthalten. Beispielsweise können die Dateneinträge des synthetischen Sensordatensatzes jeweils eine anhand des Modells ermittelte Bildinformation (Helligkeit und/oder Farbe) über den jeweiligen Messort enthalten, die eine Überprüfung der annotierten synthetischen Sensordaten erleichtern kann. Wichtiger als der Inhalt der Dateneinträge des synthetischen Sensordatensatzes ist dabei die Zuordnung dieser Dateneinträge zu einem jeweiligen der Messorte. Durch diese Zuordnung wird der Detektionsbereich des virtuellen Sensors auf den synthetischen Sensordatensatz abgebildet, insbesondere in entsprechender oder zumindest ähnlicher Weise, wie der Detektionsbereich des realen Sensors auf den realen Sensordatensatz abgebildet wird.

Insbesondere kann gemäß einer weiteren vorteilhaften Ausführungsform vorgesehen sein, dass der reale Sensordatensatz und der synthetische Sensordatensatz einander hinsichtlich der Anzahl der Dateneinträge und/oder der Zuordnung der Dateneinträge zu einem jeweiligen Messort innerhalb des jeweiligen Detektionsbereichs entsprechen.

Gemäß einer weiteren vorteilhaften Ausführungsform werden die synthetischen Sensordaten derart erzeugt, dass der Detektionsbereich des virtuellen Sensors durch die genannte Zuordnung der Dateneinträge des synthetischen Sensordatensatzes zu den Messorten innerhalb des Detektionsbereichs des virtuellen Sensors in entsprechender Weise auf den synthetischen Sensordatensatz abgebildet wird, wie der Detektionsbereich des realen Sensors durch die genannte Zuordnung der Dateneinträge des realen Sensordatensatzes zu den Messorten innerhalb des Detektionsbereichs des realen Sensors auf den realen Sensordatensatz abgebildet wird. Wie bereits erläutert kann das Abbilden des jeweiligen Detektionsbereichs auf den jeweiligen Sensordatensatz insbesondere einer geometrischen Projektion entsprechen. Beispielsweise kann in beiden Fällen jeweils ein dreidimensionaler Raumbereich auf eine zweidimensionale Fläche bzw. Matrix projiziert werden, möglicherweise allerdings mit unterschiedlicher Auflösung (unterschiedlicher Anzahl von Messorten innerhalb des jeweiligen Detektionsbereichs, denen ein jeweiliger Dateneintrag zugeordnet wird).

Gemäß einer weiteren vorteilhaften Ausführungsform umfasst das Annotieren der synthetischen Sensordaten, dass anhand des Modells für jeden Dateneintrag des synthetischen Sensordatensatzes ein in Abhängigkeit davon, ob sich der Messort, dem der jeweilige Dateneintrag zugeordnet ist, an einem der virtuellen Bezugsobjekte befindet, ermittelter Annotationswert zugewiesen wird. Die Dateneinträge des synthetischen Sensordatensatzes können dann, gegebenenfalls ausschließlich, den für den jeweiligen Dateneintrag ermittelten Annotationswert enthalten.

Es kann vorgesehen sein, dass es sich bei dem Annotationswert um einen von mehreren vorgegebenen möglichen Werten handeln muss. Beispielweise können nur zwei mögliche Annotationswerte vorgegeben sein, von denen der eine angibt, dass sich der Messort, dem der jeweilige Dateneintrag zugeordnet ist, nicht an einem der virtuellen Bezugsobjekte befindet, und der andere angibt, dass sich der Messort, dem der jeweilige Dateneintrag zugeordnet ist, an einem der virtuellen Bezugsobjekte befindet. Es können aber auch mehr mögliche Annotationswerte vorgegeben sein, von denen einer angibt, dass sich der Messort, dem der jeweilige Dateneintrag zugeordnet ist, nicht an einem der virtuellen Bezugsobjekte befindet, und die anderen nicht nur angeben, dass sich der Messort, dem der jeweilige Dateneintrag zugeordnet ist, an einem der virtuellen Bezugsobjekte befindet, sondern darüber hinaus auch eine nähere Bestimmung des jeweiligen virtuellen Bezugsobjekts erlauben, beispielsweise eine Objektklasse des realen Bezugsobjekts angeben, dem das jeweilige virtuelle Bezugsobjekt entspricht.

Insbesondere kann vorgesehen sein, dass die realen Bezugsobjekte jeweils zu (zumindest) einer von gegebenenfalls mehreren vorgegebenen Objektklassen gehören, wobei das Modell für jedes der virtuellen Bezugsobjekte Information darüber umfasst, zu welcher der Objektklassen (oder zu welchen Objektklassen) das reale Bezugsobjekt gehört, dem das jeweilige virtuelle Bezugsobjekt entspricht, und dass der Annotationswert, wenn sich der Messort, dem der jeweilige Dateneintrag zugeordnet ist, an einem der virtuellen Bezugsobjekte befindet, in zusätzlicher Abhängigkeit davon ermittelt wird, zu welcher der Objektklassen (oder zu welchen Objektklassen) das reale Bezugsobjekt gehört, dem dieses virtuelle Bezugsobjekt entspricht. Der ermittelte Annotationswert kann insbesondere gerade der jeweiligen Objektklasse (bzw. den jeweiligen Objektklassen) entsprechen, zu der (bzw. denen) das reale Bezugsobjekt gehört, dem das jeweilige virtuelle Bezugsobjekt entspricht, oder aber, wenn sich der Messort, dem der jeweilige Dateneintrag zugeordnet ist, an keinem der virtuellen Bezugsobjekte befindet, einen sonstigen Wert aufweisen, der für einen Hintergrund der Umgebung stehen kann.

Gemäß einer weiteren vorteilhaften Ausführungsform umfasst das Annotieren der realen Sensordaten, dass jedem Dateneintrag des realen Sensordatensatzes ein Annotationswert zugewiesen wird, der auf dem Annotationswert oder den Annotationswerten eines oder mehrerer dem jeweiligen Dateneintrag entsprechender Dateneinträge des annotierten synthetischen Datensatzes beruht. Dabei können ein Dateneintrag des realen Sensordatensatzes und ein Dateneintrag des synthetischen Sensordatensatzes einander insbesondere dann entsprechen, wenn der Dateneintrag des realen Sensordatensatzes einem Messpunkt innerhalb des Detektionsbereichs des realen Sensors zugeordnet ist und der Dateneintrag des synthetischen Sensordatensatzes einem entsprechenden Messpunkt innerhalb des Detektionsbereichs des virtuellen Sensors zugeordnet ist. Diese Messpunkte können einander beispielsweise insofern entsprechen, als sie zumindest im Wesentlichen dieselbe Lage oder einander überlappende Raumbereiche innerhalb des jeweiligen Detektionsbereichs einnehmen.

Besonders einfach kann das Annotieren der Sensordaten auf Grundlage der annotierten synthetischen Sensordaten erfolgen, wenn der reale Sensordatensatz und der synthetische Sensordatensatz einander hinsichtlich der Anzahl der Dateneinträge und/oder der Zuordnung der Dateneinträge zu einem jeweiligen Messort innerhalb des jeweiligen Detektionsbereichs entsprechen. In diesem Fall kann das Annotieren der realen Sensordaten umfassen, dass jedem Dateneintrag des realen Sensordatensatzes der Annotationswert des (in der genannten Weise) entsprechenden Dateneintrags des annotierten synthetischen Sensordatensatzes zugewiesen wird.

Dadurch, dass jedem Dateneintrag des realen Sensordatensatzes ein jeweiliger Annotationswert zugewiesen wird, ist der reale Sensordatensatz dann annotiert und bildet somit annotierte Sensordaten als Ergebnis des erfindungsgemäßen Verfahrens zum Erzeugen annotierter Sensordaten.

Besonders vorteilhaft ist es, wenn das erfindungsgemäße Verfahren mehrfach ausgeführt wird, um annotierte Sensordaten zu erzeugen, die sich auf verschiedene Zustände der Umgebung des realen Sensors beziehen. Die verschiedenen Zustände können sich insbesondere aufgrund dessen voneinander unterscheiden, dass sich der reale Sensor und/oder die realen Bezugsobjekte bewegen können. Für das mehrfache Ausführen des Verfahrens muss das Modell der Umgebung dann an solche Änderungen jeweils angepasst werden.

Gemäß einer weiteren vorteilhaften Ausführungsform umfasst das Verfahren: dass zu mehreren verschiedenen Zeitpunkten jeweils mittels des realen Sensors reale Sensordaten über die Umgebung des realen Sensors erzeugt werden, wobei sich die Zeitpunkte im Hinblick darauf unterscheiden, welche Position und/oder Ausrichtung der reale Sensor aufweist, welche realen Bezugsobjekte sich in der Umgebung befinden und/oder welche Position und/oder Ausrichtung die in der Umgebung befindlichen realen Bezugsobjekte jeweils aufweisen; dass das Modell der Umgebung für die verschiedenen Zeitpunkte jeweils aktualisiert (d. h. an den zu dem jeweiligen Zeitpunkt vorliegenden Zustand der Umgebung angepasst) wird, so dass das für den jeweiligen Zeitpunkt aktuelle Modell einen dem realen Sensor hinsichtlich seiner Position und Ausrichtung zu dem jeweiligen Zeitpunkt entsprechenden virtuellen Sensor sowie für jedes der zu dem jeweiligen Zeitpunkt in der Umgebung befindlichen realen Bezugsobjekte ein dem jeweiligen realen Bezugsobjekt hinsichtlich seiner Position und Ausrichtung zu dem jeweiligen Zeitpunkt entsprechendes virtuelles Bezugsobjekt umfasst; dass für die verschiedenen Zeitpunkte jeweils anhand des für den jeweiligen Zeitpunkt aktuellen Modells synthetische Sensordaten über die Umgebung erzeugt und annotiert werden; und dass jeweils auf Grundlage der für einen jeweiligen Zeitpunkt erzeugten und annotierten synthetischen Sensordaten die zu dem jeweiligen Zeitpunkt erzeugten realen Sensordaten annotiert werden.

Die mehreren verschiedenen Zeitpunkte können eine definierte, gegebenenfalls vorgegebene, Menge von Zeitpunkten bilden, zu denen jeweils mittels des realen Sensors reale Sensordaten erzeugt werden und für die das Modell der Umgebung des realen Sensors jeweils aktualisiert wird (nicht unbedingt zu den jeweiligen Zeitpunkten oder kurz danach, sondern unter Umständen auch erst nachträglich), um jeweils anhand des für den jeweiligen Zeitpunkt aktuellen Modells synthetische Sensordaten zu erzeugen und zu annotieren, deren Annotation dann auf die zu dem jeweiligen Zeitpunkt erzeugten realen Sensordaten übertragen werden. Es kann aber auch vorgesehen sein, dass während eines bestimmten oder auch unbestimmten Zeitraums fortlaufend reale Sensordaten erzeugt werden, die dann annotiert werden sollen. In diesem Fall kann es zweckmäßig sein, das Modell der Umgebung des realen Sensors fortlaufend, idealerweise in Echtzeit, zu aktualisieren.

Gemäß einer weiteren vorteilhaften Ausführungsform umfasst das Verfahren: dass fortlaufend mittels des realen Sensors reale Sensordaten über die Umgebung des realen Sensors erzeugt werden; dass das Modell der Umgebung fortlaufend (vorzugsweise in Echtzeit) aktualisiert wird, so dass das jeweilige aktuelle Modell (vorzugsweise mit einer begrenzten maximalen Zeitverzögerung) einen dem realen Sensor hinsichtlich seiner Position und Ausrichtung zu dem jeweiligen Zeitpunkt entsprechenden virtuellen Sensor sowie für jedes der zu dem jeweiligen Zeitpunkt in der Umgebung befindlichen realen Bezugsobjekte einen dem jeweiligen realen Bezugsobjekt hinsichtlich seiner Position und Ausrichtung zu dem jeweiligen Zeitpunkt entsprechendes virtuelles Bezugsobjekt umfasst; dass fortlaufend (vorzugsweise in Echtzeit) anhand des jeweiligen aktuellen Modells synthetische Sensordaten über die Umgebung erzeugt und annotiert werden; und dass fortlaufend (vorzugsweise in Echtzeit) auf Grundlage der jeweiligen annotierten synthetischen Sensordaten die jeweiligen realen Sensordaten annotiert werden.

Um das Modell der Umgebung des realen Sensors fortlaufend zu aktualisieren, kann vorgesehen sein, dass fortlaufend (vorzugsweise in Echtzeit) Daten über die Position und/oder Ausrichtung des realen Sensors und/oder der realen Bezugsobjekte erfasst und in das Modell eingegeben werden. Diese Daten können zum Beispiel von dem realen Sensor bzw. dem jeweiligen realen Bezugsobjekt selbst erfasst werden. Idealerweise ist das Erfassen solcher Daten, etwa im Rahmen einer eingerichteten Automatisierung, ohnehin vorgesehen, beispielweise wenn es sich bei den realen Bezugsobjekten um fahrerlose Transportfahrzeuge (Automated Guided Vehicles, AVGs) handelt, die fortlaufend eine für ihre Navigation ohnehin erforderliche Selbstlokalisation vornehmen.

Auch bei den beiden vorstehenden Ausführungsformen kann das Verfahren jeweils außerdem umfassen, dass das Modell der Umgebung zunächst einmal erzeugt wird. Anschließend braucht es dann nur noch für die verschiedenen Zeitpunkte bzw. fortlaufend aktualisiert zu werden.

Gemäß einer weiteren vorteilhaften Ausführungsform umfasst das Verfahren ferner: dass auf die erzeugten realen Sensordaten eine Objekterkennung angewandt wird; und dass mittels der Objekterkennung erkannte Objekte anhand der annotierten realen Sensordaten entweder als einem jeweiligen der realen Bezugsobjekte entsprechend oder (falls sich eine solche Entsprechung nicht feststellen lässt) als Sonderobjekt identifiziert werden.

Die Objekterkennung kann insbesondere dazu ausgebildet sein, lediglich zu unterscheiden, ob sich reale Sensordaten (jeweilige Dateneinträge eines realen Sensordatensatzes) überhaupt auf ein von einem Hintergrund der Umgebung verschiedenes Objekt beziehen oder nicht. Eine solche Objekterkennung kann sich zumindest im Wesentlichen darauf beschränken, Unterschiede zwischen den von dem realen Sensor erzeugten realen Sensordaten über die Umgebung des realen Sensors, in der sich ein oder mehrere Objekte befinden können, mit Referenzsensordaten über einen Hintergrund der Umgebung zu vergleichen, die von dem realen Sensor erzeugt worden sind, als die Umgebung frei von Objekten war, wobei Bereiche, in denen ein Unterschied festgestellt wird, als Bereiche, die (zumindest) ein Objekt enthalten, erkannt werden. Es kommen aber auch sonstige, insbesondere komplexere Verfahren der Objekterkennung in Betracht, die für sich genommen bekannt sein können.

Mittels der Objekterkennung können insbesondere auch Objekte erkannt werden, die nicht im a-priori-Wissen über die Umgebung des realen Sensors enthalten sind und für die daher auch das Modell der Umgebung kein entsprechendes virtuelles Objekt umfasst. Das ermöglicht es, das modell-basierte, vom Inhalt der realen Sensordaten unabhängige Annotieren der realen Sensordaten durch zusätzliche, auf dem Inhalt der realen Sensordaten beruhende Information auf vergleichsweise einfache Weise noch zu ergänzen. Denn durch Vergleich des Ergebnisses der Objekterkennung mit den annotierten realen Sensordaten lassen sich Objekte, die keinem der realen Bezugsobjekt entsprechen, unmittelbar als Sonderobjekt identifizieren. Die Bezeichnung als Sonderobjekt dient dabei nur der begrifflichen Unterscheidung von den Bezugsobjekten, die im a-priori-Wissen über die Umgebung des Sensors enthalten sind. Insbesondere im Rahmen einer laufenden Automatisierung kann es erforderlich sein, auf solche Sonderobjekte besonders zu achten, weil von ihnen eine Störung ausgehen kann und/oder sie gefährdet sein könnten. Die Sonderobjekte könnten insofern beispielsweise auch als Beobachtungsobjekte, Ausnahmeobjekte oder Störobjekte bezeichnet werden.

Die identifizierten Sonderobjekte stellen eine ergänzende Information dar, auf deren Grundlage die realen Sensordaten noch zusätzlich annotiert werden können. Dazu können diejenigen Dateneinträge des realen Sensordatensatzes, die sich gemäß dem Ergebnis der Objekterkennung auf ein jeweiliges Objekt beziehen, für das anhand der auf Grundlage der annotierten synthetischen Sensordaten annotierten realen Sensordaten festgestellt wurde, dass es keinem der realen Bezugsobjekte entspricht, als einem Sonderobjekt entsprechend annotiert werden. Wenn für die Umgebung des realen Sensors bekannt ist, dass sich innerhalb der Umgebung als von einem Hintergrund der Umgebung verschiedene Objekte außer den realen Bezugsobjekten ausschließlich Sonderobjekt einer bestimmten Art (beispielsweise ausschließlich Menschen) befinden können, kann den entsprechenden realen Sensordaten auch direkt ein für Sonderobjekte dieser bestimmten Art spezifischer Annotationswert zugewiesen werden.

Gemäß einer weiteren vorteilhaften Ausführungsform erfolgen das Anwenden der Objekterkennung und das genannte Identifizieren der erkannten Objekte fortlaufend (vorzugsweise in Echtzeit), wobei in Abhängigkeit davon, ob ein erkanntes Objekt als Sonderobjekt identifiziert worden ist und gegebenenfalls wo es sich innerhalb des Detektionsbereichs und/oder relativ zu einem oder mehreren der realen Bezugsobjekte befindet, eine Sicherheitsreaktion ausgelöst wird.

Durch die Kombination des auf dem Modell der Umgebung des realen Sensors basierenden Annotierens mit der auf den realen Sensordaten basierenden Objekterkennung wird einerseits die Flexibilität des Verfahrens erhöht, da auch Objekte berücksichtigt, insbesondere klassifiziert, werden können, die im Modell der Umgebung nicht enthalten sind und sich möglicherweise auch gar nicht ohne Weiteres modellieren lassen; andererseits kann sich die Sicherheit einer Überwachung der Umgebung mittels des realen Sensors erhöhen, weil auch auf unerwartete oder jedenfalls nicht planmäßige Anwesenheiten von Objekten, die einen automatisierten Ablauf stören könnten oder für die sich durch den automatisierten Ablauf eine Gefährdung ergeben könnte, reagiert werden kann, nämlich durch die genannte Sicherheitsreaktion.

Bei der Sicherheitsreaktion kann es sich beispielsweise um ein Unterbrechen oder verlangsamen eines automatisierten Ablaufs handeln. Es sind aber auch differenziertere Sicherheitsreaktionen denkbar, bei denen nicht nur das Auslösen der Sicherheitsreaktion, sondern auch das, was als Sicherheitsreaktion erfolgt, vom Identifizieren eines erkannten Objekts als Sonderobjekt und gegebenenfalls dessen jeweiliger Position innerhalb des Detektionsbereichs, insbesondere relativ zu einem oder mehreren realen Bezugsobjekten, abhängt.

Die eingangs genannte Aufgabe wird ferner gelöst durch ein Computerprogrammprodukt, das auf einem computerlesbaren Datenträger gespeichert ist und Anweisungen umfasst, die, wenn sie auf einem Computersystem ausgeführt werden, das erfindungsgemäße Verfahren, gegebenenfalls gemäß einer der vorstehend beschriebenen Ausführungsformen, ausführen. Das Computersystem kann zu diesem Zweck insbesondere mit dem realen Sensor verbunden sein, um den realen Sensor zu dem Erzeugen der realen Sensordaten anzusteuern und die erzeugten realen Sensordaten von dem realen Sensor zu empfangen. Des Weiteren wird die Aufgabe gelöst durch einen computerlesbaren Datenträger, auf dem ein solches Computerprogrammprodukt gespeichert ist.

Die Erfindung wird im Folgenden lediglich beispielhaft unter Bezugnahme auf die Figuren weiter erläutert.
- Fig. 1: zeigt in schematischer Darstellung den Ablauf eines erfindungsgemäßen Verfahrens zum Erzeugen annotierter Sensordaten.
- Fig. 2: zeigt synthetische Sensordaten in Form eines synthetischen Sensordatensatzes.
- Fig. 3: zeigt annotierte synthetische Sensordaten, die durch Annotieren der in Fig. 2 gezeigten synthetischen Sensordaten erzeugt worden sind.
- Fig. 4: zeigt annotierte reale Sensordaten in Form eines realen Sensordatensatzes, die auf Grundlage der in Fig. 3 gezeigten annotierten synthetischen Sensordaten annotiert worden sind.

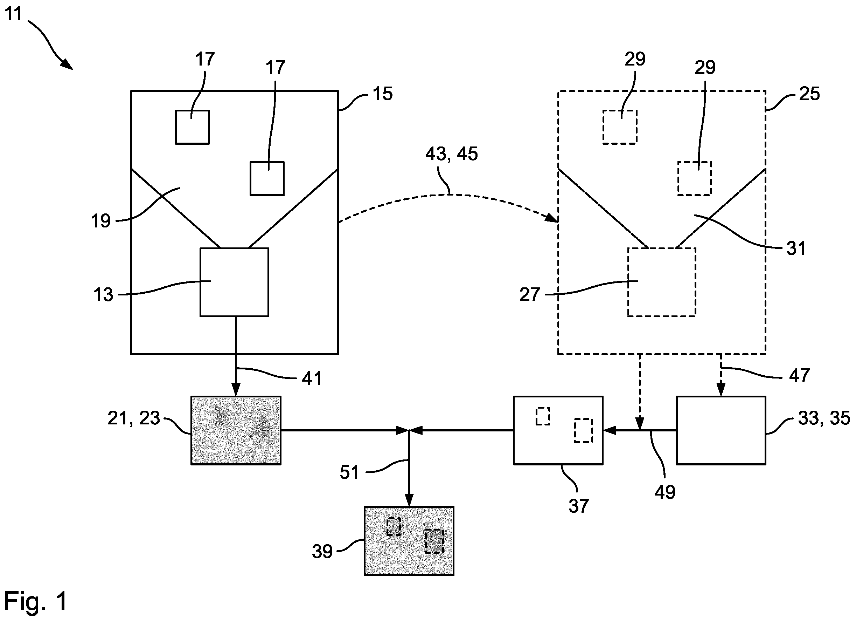

In Fig. 1 ist zur Illustration des erfindungsgemäßen Verfahrens 11 dessen Ablauf gemäß einer möglichen Ausführungsform schematisch dargestellt.

Dabei ist ein realer Sensor 13 vorgesehen, der sich innerhalb einer dreidimensionalen Umgebung 15 des realen Sensors 13 befindet. Innerhalb derselben Umgebung 15 befinden sich außerdem zwei reale Bezugsobjekte 17. Der reale Sensor 13 ist dazu ausgebildet, innerhalb eines Sichtfeldes des realen Sensors 13 Messwerte zu messen. Das Sichtfeld des realen Sensors 13 bildet insofern einen Detektionsbereich 19 des realen Sensors 13, der einem Teilbereich der Umgebung 15 entspricht. Die realen Bezugsobjekte 17 befinden sich in dem gezeigten Beispiel innerhalb des Detektionsbereichs 19 des realen Sensors 13. Die realen Bezugsobjekte 17 können aber beweglich sein, so dass sie ihre Position und/oder Ausrichtung innerhalb des Detektionsbereichs 19 verändern können und den Detektionsbereichs 19, gegebenenfalls sogar die Umgebung 15 insgesamt, auch verlassen können. Dadurch kann sich auch die Anzahl der realen Bezugsobjekte 17 innerhalb des Detektionsbereichs 19 des realen Sensors 13 verändern.

Gemäß dem Verfahren 11 werden mittels des realen Sensors 13 reale Sensordaten 21 über die Umgebung 15, nämlich speziell über den Detektionsbereich 19 des realen Sensors 13 innerhalb der Umgebung 15, erzeugt. Das Erzeugen der realen Sensordaten 21 wird in Fig. 1 durch den Pfeil 41 symbolisiert. Dabei misst der reale Sensor 13 an einer Vielzahl von Messorten innerhalb des Detektionsbereichs 19 jeweils einen Messwert. Die Messorte sind dabei entsprechend einer räumlichen Auflösung des realen Sensors 13 aus Sicht des realen Sensors 13 gleichmäßig über den Detektionsbereich 19 verteilt angeordnet. Basierend auf den Messungen wird ein realer Sensordatensatz 23 erzeugt, der für jeden der Messorte einen dem jeweiligen Messort zugeordneten Dateneintrag umfasst, in dem der für denjenigen Messort gemessenen Messwert gespeichert wird. Die vom realen Sensor 13 erzeugten realen Sensordaten 21 umfassen einen oder (falls wiederholt oder fortlaufend gemessen wird) mehrere solcher realer Sensordatensätze 23.

Bei dem gezeigten Beispiel kann es sich bei dem realen Sensor 13 um einen Abstandssensor handeln; der reale Sensordatensatz 23 kann dann einer zweidimensionalen Tiefenkarte des dreidimensionalen Detektionsbereichs 19 des realen Sensors 13 entsprechen, wobei die in Zeilen und Spalten angeordneten Bildpunkte der Tiefenkarte den Dateneinträgen des realen Sensordatensatzes 23 entsprechen, von denen jeder einem jeweiligen Messort innerhalb des Detektionsbereichs 19 des realen Sensors 13 zugeordnet ist und als Messwert den für den jeweiligen Messort vom realen Sensor 13 gemessenen Abstand aufweist. Dabei entspricht die relative Position eines jeweiligen Dateneintrags innerhalb des realen Sensordatensatzes 23 (d. h. eines jeweiligen Bildpunkts innerhalb der Tiefenkarte) der relativen Position desjenigen Messorts innerhalb des Detektionsbereichs 19 (d. h. des Sichtfelds) des realen Sensors 13, dem der jeweilige Dateneintrag zugeordnet ist. Insofern wird durch die genannte Zuordnung der Dateneinträge des realen Sensordatensatzes 23 zu jeweils einem Messort innerhalb des Detektionsbereichs 19 der Detektionsbereich 19 auf den realen Sensordatensatz 23 abgebildet.

Das Verfahren 11 setzt voraus, dass Informationen über die Umgebung 15 des realen Sensors 13, insbesondere die Maße, Position und/oder Ausrichtung des realen Sensors 13 innerhalb der Umgebung 15 sowie über die Maße, Position und/oder Ausrichtung gegebenenfalls innerhalb der Umgebung 15 befindlicher realer Bezugsobjekte 17 als a-priori-Wissen bekannt sind. Dadurch kann die Umgebung 15 durch ein Modell 25 der Umgebung 15, beispielsweise in Form eines computerimplementierten Modells, nachgebildet werden. Das Modell 25 umfasst dann einen virtuellen Sensor 27, der dem realen Sensor 13 entspricht, sowie für jedes der in der Umgebung 15 befindlichen realen Bezugsobjekte 17 ein dem jeweiligen realen Bezugsobjekt 17 entsprechendes virtuelles Bezugsobjekt 29. Der virtuelle Sensor 27 weist dabei einen dem Detektionsbereichs 19 des realen Sensors 13 entsprechenden Detektionsbereich 31 auf; die virtuellen Bezugsobjekte 29 sind dabei in entsprechender Weise relativ zu dem virtuellen Sensor 27 angeordnet wie die realen Bezugsobjekte 17 relativ zu dem realen Sensor 13, so dass sich jedes virtuelle Bezugsobjekt 29, das einem im Detektionsbereich 19 des realen Sensors befindlichen realen Bezugsobjekt 17 entspricht, an entsprechender Position in dem Detektionsbereich 31 des virtuellen Sensors 27 befindet.

Das Verfahren 11 kann das Erzeugen 43 des Modells 25 umfassen. Das Modell 25 kann aber auch bereits vorgegeben sein. Dabei ist es jeweils bevorzugt, dass das Modell 25 an Änderungen innerhalb der Umgebung 15, beispielsweise Bewegungen der realen Bezugsobjekte 17, regelmäßig angepasst wird. Ein solches Aktualisieren 45 des Modells 25 kann zum Beispiel dadurch erfolgen, dass die realen Bezugsobjekte 17 Änderungen ihrer Position jeweils an das Modell 25 melden. Das Modell 25 kann auf diese Weise zu jedem Zeitpunkt den jeweils aktuellen Zustand der Umgebung 15 widerspiegeln. Insofern können der virtuellen Sensor 27 und die virtuellen Bezugsobjekte 29 als digitale Zwillinge des realen Sensors 13 bzw. eines jeweiligen der realen Bezugsobjekte 17 ausgebildet sein.

Das Verfahren 11 umfasst ferner, dass anhand des Modells 25 synthetische Sensordaten 33 über die Umgebung 15 erzeugt werden. Das Erzeugen der synthetischen Sensordaten 33 wird in Fig. 1 durch den Pfeil 47 symbolisiert. Die synthetischen Sensordaten 33 beziehen sich insofern auf die Umgebung 15, als anhand des Modells der Umgebung 15 entsprechend wie bei den realen Sensordaten 21 für das Erzeugen 47 der synthetischen Sensordaten 33 ein synthetischer Sensordatensatz 35 erzeugt wird, der für ein oder mehrere Messorte innerhalb des Detektionsbereichs 31 des virtuellen Sensors 27 jeweils einen dem jeweiligen Messort zugeordneten Dateneintrag umfasst, wobei der Detektionsbereichs 31 des virtuellen Sensors 27 durch die Zuordnung der Dateneinträge des synthetischen Sensordatensatzes 35 zu jeweils einem Messort innerhalb des Detektionsbereichs 31 des virtuellen Sensors 27 in entsprechender Weise auf den synthetischen Sensordatensatz 35 abgebildet wird, wie der Detektionsbereich 19 des realen Sensors 13 auf den realen Sensordatensatz 23 abgebildet wird. Die Entsprechung liegt dabei zumindest in geometrischer Hinsicht vor; die Anzahl der Messorte bzw. Dateneinträge und somit die Auflösung, mit der der jeweilige Detektionsbereich 19 bzw. 31 erfasst wird, müssen dagegen im Modell und in der Realität nicht unbedingt identisch sein. Ein weiterer Unterschied kann zudem darin bestehen, dass, während die Dateneinträge des realen Sensordatensatzes 23 die von dem realen Sensor 13 gemessenen Messwerte enthalten, die Dateneinträge des synthetischen Sensordatensatzes 35 nicht unbedingt ebenfalls entsprechende (synthetische) Messwerte enthalten müssen, sondern eine sonstige Information enthalten oder auch leer sein können.

Da das Modell 25 die virtuellen Bezugsobjekte 29 sowie Information darüber umfasst, wie der Detektionsbereich 31 des virtuellen Sensors 27 auf den synthetischen Sensordatensatz 35 abgebildet wird, lässt sich anhand des Modells 25 für jeden Dateneintrag des synthetischen Sensordatensatzes 35 feststellen, ob sich der Messort, dem der jeweilige Dateneintrag zugeordnet ist, an einem der virtuellen Bezugsobjekte 29 befindet. Somit kann jedem Dateneintrag ein von dem Ergebnis dieser Feststellung abhängiger Annotationswert zugewiesen werden, wobei der Annotationswert zusätzlich davon abhängen kann, um was für ein jeweiliges Bezugsobjekt 17 bzw. 29 es sich handelt. Insbesondere kann der Annotationswert einer Objektklasse des jeweiligen Bezugsobjekts 17 bzw. 29 entsprechen. Durch das genannte Zuweisen der Annotationswerte werden die synthetischen Sensordaten 33 annotiert, so dass sich annotierte synthetische Sensordaten 37 ergeben. Das Annotieren der synthetischen Sensordaten 33 wird in Fig. 1 durch den Pfeil 49 symbolisiert, wobei ein weiterer Pfeil zwischen dem Modell 25 und dem Pfeil 49 illustriert, dass das Annotieren 49 anhand der in dem Modell 25 enthaltenen Information erfolgt.

Infolge des Annotierens 49 der synthetischen Sensordaten 33 lassen sich in den annotierten synthetischen Sensordaten 37 Bereiche, die sich gemäß dem Ergebnis des Annotierens 49 auf eines der virtuellen Bezugsobjekte 29 beziehen, von einem oder mehreren sonstigen Bereichen unterscheiden. In Fig. 1 sind diese Bereiche innerhalb der annotierten synthetischen Sensordaten 37 durch unterbrochene Linien gegeneinander abgegrenzt. Das Ergebnis des Annotierens 49 kann insofern als eine Segmentierungsmaske oder Annotationsmaske fungieren, die sich auf die realen Sensordaten 21 übertragen lässt.

Das Verfahren 11 umfasst schließlich, dass auf Grundlage der annotierten synthetischen Sensordaten 37 die realen Sensordaten 21 annotiert werden, so dass im Ergebnis annotierte reale Sensordaten 39 vorliegen. In das Annotieren 51 der realen Sensordaten 21 gehen zum einen die realen Sensordaten 21 und zum anderen das Ergebnis des Annotierens 49 der synthetischen Sensordaten 33 ein, was durch die beiden Pfeile symbolisiert wird, die von den realen Sensordaten 21 bzw. den annotierten synthetischen Sensordaten 37 zum dem das Annotieren der realen Sensordaten symbolisierenden Pfeil 51 führen.

In dem gezeigten Beispiel kann für das Annotieren 51 der realen Sensordaten 21 die genannte Segmentierungsmaske oder Annotationsmaske einfach auf die realen Sensordaten 21 übertragen werden. Allgemein kann für das Annotieren 51 der realen Sensordaten 21 jedem Dateneintrag des realen Sensordatensatzes 23 der Annotationswert des entsprechenden Dateneintrags des synthetischen Sensordatensatzes 35 zugewiesen werden. Die als Ergebnis des Verfahrens 11 erzeugten annotierten realen Sensordaten 39 umfassen dann im Vergleich zu den noch nicht annotierten realen Sensordaten 21 zusätzlich die aus den annotierten synthetischen Sensordaten 37 übernommene Information darüber, welche Bereiche der Sensordaten 21 bzw. 33 sich auf eines der Bezugsobjekte 17 bzw. 29 beziehen sowie gegebenenfalls um was für ein Bezugsobjekt 17 bzw. 29 es sich dabei handelt.

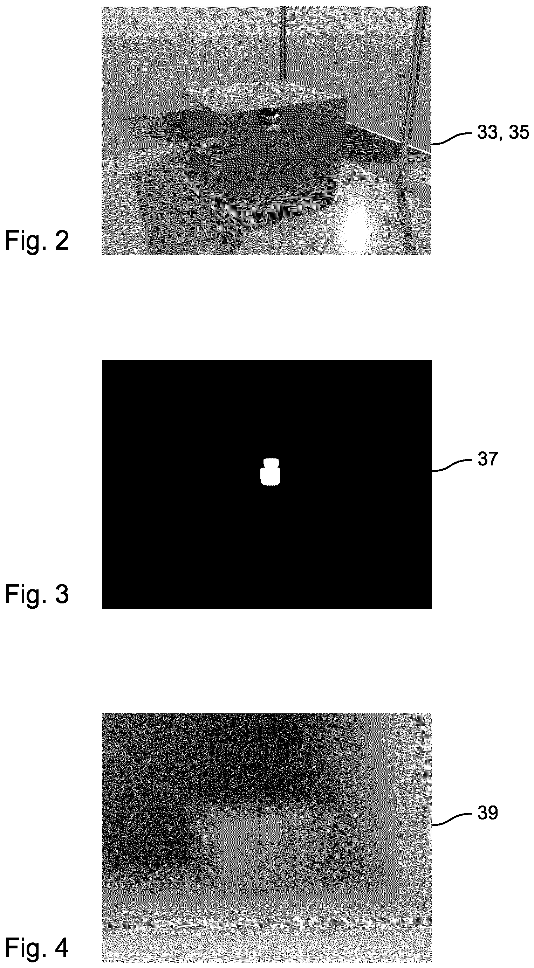

In den Fig. 2 bis 4 ist ein konkretes Beispiel für Sensordaten 33, 37 bzw. 39 gezeigt. In diesem konkreten Beispiel handelt es sich bei der Umgebung 15 um einen Raum einer Produktionsanlage, in der als reale Bezugsobjekte 17 ein oder mehrere Sicherheitslaserscanner platziert sein können. In der Produktionsanlage ist zudem ein realer Sensor 13 in Form eines optischen Abstandssensors installiert, der einen Detektionsbereich 19 innerhalb der Umgebung 15, nämlich einen Eckbereich des Raums, erfasst und als reale Sensordaten 21 einen realen Sensordatensatz 23 in Form einer Tiefenkarte des Detektionsbereichs 19 (vgl. Fig. 4) erzeugt.

Der dreidimensionale Aufbau der Produktionsanlage einschließlich der Position und Ausrichtung des realen Sensors 13 ist im Detail bekannt, so dass die Umgebung 15 durch ein dreidimensionales Modell 25 nachgebildet werden kann, das einen dem realen Sensor 13 entsprechenden virtuellen Sensor 27 umfasst. Auch die Sicherheitslaserscanner weisen bekannte Maße auf, so dass sie in dem Modell 25 durch entsprechende virtuelle Bezugsobjekte 29 nachgebildet werden können. Außerdem sind (aufgrund der Fähigkeit der Sicherheitslaserscanner, sich über ihre Sensordaten selbst zu lokalisieren) die Position und Ausrichtung der Sicherheitslaserscanner zu jedem Zeitpunkt bekannt. Daher kann diese Information genutzt werden, um die virtuellen Bezugsobjekte in dem Modell 25 entsprechend zu platzieren und das Modell 25 erforderlichenfalls auch an Veränderungen der Position bzw. Ausrichtung der Sicherheitslaserscanner anzupassen. Das Modell 25 spiegelt somit immer die aktuelle räumliche Position und Ausrichtung der Sicherheitslaserscanner wider.

Die Fig. 2 zeigt synthetische Sensordaten 33 in Form eines synthetischen Sensordatensatzes 35, der anhand des Modells 25 der Umgebung 15 erzeugt worden ist. Der synthetische Sensordatensatz 35 ist dabei als zweidimensionales Bild des dreidimensionalen Detektionsbereichs 31 des virtuellen Sensors 27 aus der Sicht des virtuellen Sensors 27 ausgebildet. Dabei weist jeder Dateneintrag (Bildpunkt) des synthetischen Sensordatensatzes 35 einen Helligkeitswert auf, wie ihn der virtuelle Sensor 27 gemessen haben könnte, wenn es sich dabei um eine Kamera handeln würde - auch wenn es sich bei dem realen Sensor 13 nicht um eine Kamera, sondern um einen Abstandssensor handelt. Zwar enthält der synthetische Sensordatensatz 35 somit keine den Messwerten eines mittels des realen Sensors 13 erzeugten realen Sensordatensatzes 23 entsprechende (Abstands-)Werte, aber durch den synthetischen Sensordatensatz 23 wird der jeweilige Detektionsbereich 19 bzw. 31 auf eine entsprechende Weise abgebildet wie durch den realen Sensordatensatz 23.

Anhand der in dem Modell 25 vorliegenden Information über die Position und Ausrichtung der virtuellen Bezugsobjekte 29, die einem jeweiligen realen Sicherheitslaserscanner entsprechen, kann jedem Dateneintrag des in Fig. 2 gezeigten synthetischen Sensordatensatzes 35 ein Annotationswert zugeordnet werden, wodurch der synthetische Sensordatensatz 35 annotiert wird. Die resultierenden annotierten synthetischen Sensordaten 37 sind in Fig. 3 gezeigt und umfassen neben der Bildinformation, die auch schon die noch nicht annotierten synthetischen Sensordaten 33 enthalten haben, die Annotationswerte als zusätzliche Information, wobei die Darstellung der annotierten synthetischen Sensordaten 37 in Fig. 3 ausschließlich die Annotationswerte widerspiegelt. Dabei sind Dateneinträge (Bildpunkte) des annotierten synthetischen Sensordatensatzes 37, gemäß deren Annotationswert anhand des Modells 25 festgestellt worden ist, dass sie sich auf ein virtuelles Bezugsobjekt beziehen, weiß gezeigt, wohingegen die übrigen Dateneinträge (Bildpunkte) schwarz gezeigt sind.

Diese Annotationsinformation kann dann auf reale Sensordaten 21 übertragen werden um die in Fig. 4 gezeigten annotierten realen Sensordaten 39 zu erzeugen. Da nämlich das Modell 25 die Weise nachbildet, in der der Detektionsbereich 19 des realen Sensors 13 auf den realen Sensordatensatz 23 abgebildet wird, lassen sich die Dateneinträge des synthetischen Sensordatensatzes 35 zumindest näherungsweise den Dateneinträgen des realen Sensordatensatzes 23 zuordnen, auch wenn der reale Sensordatensatz 23 und der synthetische Sensordatensatz 35 nicht unbedingt dieselbe Auflösung aufweisen müssen. Beim Übertragen der Annotationsinformation kann diese gegebenenfalls auch modifiziert, beispielsweise vereinfacht, werden. Bei dem gezeigten Beispiel wird der Bereich der annotierten synthetischen Sensordaten 37, der dem Sicherheitslaserscanner entspricht, (weißer Bereich in Fig. 3) zu einer Bounding Box, d. h. einem einhüllenden Rechteck, vereinfacht, die in der Darstellung der annotierten realen Sensordaten 39 in Fig. 4 als Rechteck mit unterbrochener Linie dargestellt ist.

Während die von dem realen Sensor 13 erzeugten realen Sensordaten 21 auf Grundlage dieser realen Sensordaten 21 selbst nur vergleichsweise unzuverlässig, etwa durch Verfahren der Künstlichen Intelligenz, annotiert werden könnten, erlaubt das erfindungsgemäße Verfahren 11 durch die Nutzung von vorhandenem a-priori-Wissen ein besonders zuverlässiges Erzeugen von Annotationsinformation, die sich dann auf die realen Sensordaten 21 übertragen lässt. Auf diese Weise können annotierte Sensordaten 31 erzeugt werden, die auch im Zusammenhang mit sicherheitskritischen Funktionen verwendet werden können.

### Bezugszeichen

- 11: Verfahren
- 13: realer Sensor
- 15: Umgebung
- 17: reales Bezugsobjekt
- 19: Detektionsbereich des realen Sensors
- 21: reale Sensordaten
- 23: realer Sensordatensatz
- 25: Modell der Umgebung
- 27: virtueller Sensor
- 29: virtuelles Bezugsobjekt
- 31: Detektionsbereich des virtuellen Sensors
- 33: synthetische Sensordaten
- 35: synthetischer Sensordatensatz
- 37: annotierte synthetische Sensordaten
- 39: annotierte reale Sensordaten
- 41: Erzeugen der realen Sensordaten
- 43: Erzeugen des Modells
- 45: Aktualisieren des Modells
- 47: Erzeugen der synthetischen Sensordaten
- 49: Annotieren der synthetischen Sensordaten
- 51: Annotieren der realen Sensordaten

## Patentansprüche

1. Verfahren (11) zum Erzeugen annotierter Sensordaten, das umfasst:
- dass mittels eines realen Sensors (13) reale Sensordaten (21) über eine Umgebung (15) des realen Sensors (13) erzeugt werden, in der sich ein oder mehrere reale Bezugsobjekte (17) befinden können;
- dass anhand eines Modell (25) der Umgebung (15), das einen virtuellen Sensor (27) umfasst, der dem realen Sensor (13) entspricht, sowie für jedes der in der Umgebung (15) befindlichen realen Bezugsobjekte (17) ein dem jeweiligen realen Bezugsobjekt (17) entsprechendes virtuelles Bezugsobjekt (29) umfasst, synthetische Sensordaten (33) über die Umgebung (15) erzeugt werden;
- dass die synthetischen Sensordaten (33) anhand des Modells (25) im Hinblick darauf annotiert werden, ob sie sich auf eines der virtuellen Bezugsobjekte (29) beziehen; und
- dass auf Grundlage der annotierten synthetischen Sensordaten (39) die realen Sensordaten (21) annotiert werden.

2. Verfahren nach Anspruch 1,
wobei das Erzeugen (41) der realen Sensordaten (21) umfasst,
- dass mittels des realen Sensors (13) für einen oder mehrere Messorte innerhalb eines Detektionsbereichs (19) des realen Sensors (13) jeweils ein Messwert gemessen wird und dass ein realer Sensordatensatz (23) erzeugt wird, der für jeden der Messorte einen dem jeweiligen Messort zugeordneten Dateneintrag mit dem für den jeweiligen Messort gemessenen Messwert umfasst.

3. Verfahren nach Anspruch 1 oder 2,
wobei das Erzeugen (47) der synthetischen Sensordaten (33) umfasst,
- dass anhand des Modells (25) ein synthetischer Sensordatensatz (35) erzeugt wird, der für einen oder mehrere Messorte innerhalb eines Detektionsbereichs (31) des virtuellen Sensors (27), der einem Detektionsbereich (19) des realen Sensors (13) entspricht, jeweils einen dem jeweiligen Messort zugeordneten Dateneintrag umfasst.

4. Verfahren nach den Ansprüchen 2 und 3,
wobei der reale Sensordatensatz (23) und der synthetische Sensordatensatz (35) einander hinsichtlich der Anzahl der Dateneinträge und/oder der Zuordnung der Dateneinträge zu einem jeweiligen Messort innerhalb des jeweiligen Detektionsbereichs (19 bzw. 31) entsprechen.

5. Verfahren nach zumindest den Ansprüchen 2 und 3,
wobei die synthetischen Sensordaten (33) derart erzeugt werden, dass der Detektionsbereich (31) des virtuellen Sensors (27) durch die genannte Zuordnung der Dateneinträge des synthetischen Sensordatensatzes (35) zu den Messorten innerhalb des Detektionsbereichs (31) des virtuellen Sensors (27) in entsprechender Weise auf den synthetischen Sensordatensatz (35) abgebildet wird, wie der Detektionsbereich (19) des realen Sensors (13) durch die genannte Zuordnung der Dateneinträge des realen Sensordatensatzes (23) zu den Messorten innerhalb des Detektionsbereichs (19) des realen Sensors (13) auf den realen Sensordatensatz (23) abgebildet wird.

6. Verfahren nach einem der Ansprüche 3 bis 5,
wobei das Annotieren (49) der synthetischen Sensordaten (33) umfasst,
- dass anhand des Modells (25) für jeden Dateneintrag des synthetischen Sensordatensatzes (35) ein in Abhängigkeit davon, ob sich der Messort, dem der jeweilige Dateneintrag zugeordnet ist, an einem der virtuellen Bezugsobjekte (29) befindet, ermittelter Annotationswert zugewiesen wird.

7. Verfahren nach Anspruch 6,
wobei die realen Bezugsobjekte (17) jeweils zu einer von gegebenenfalls mehreren vorgegebenen Objektklassen gehören,
wobei das Modell (25) für jedes der virtuellen Bezugsobjekte (29) Information darüber umfasst, zu welcher der Objektklassen das reale Bezugsobjekt (17) gehört, dem das jeweilige virtuelle Bezugsobjekt (29) entspricht, und
wobei der Annotationswert, wenn sich der Messort, dem der jeweilige Dateneintrag zugeordnet ist, an einem der virtuellen Bezugsobjekte (29) befindet, in zusätzlicher Abhängigkeit davon ermittelt wird, zu welcher der Objektklassen das reale Bezugsobjekt (17) gehört, dem dieses virtuelle Bezugsobjekt (29) entspricht.

8. Verfahren nach zumindest den Ansprüchen 2, 3 und 6,
wobei das Annotieren (51) der realen Sensordaten (21) umfasst,
- dass jedem Dateneintrag des realen Sensordatensatzes (23) ein Annotationswert zugewiesen wird, der auf dem Annotationswert oder den Annotationswerten eines oder mehrerer dem jeweiligen Dateneintrag entsprechender Dateneinträge des annotierten synthetischen Sensordatensatzes (37) beruht.

9. Verfahren nach zumindest den Ansprüchen 2, 3, 4 und 6,
wobei das Annotieren (51) der realen Sensordaten (21) umfasst,
- dass jedem Dateneintrag des realen Sensordatensatzes (23) der Annotationswert des entsprechenden Dateneintrags des annotierten synthetischen Sensordatensatzes (37) zugewiesen wird.

10. Verfahren nach einem der vorstehenden Ansprüche,
wobei das Verfahren (11) umfasst:
- dass zu mehreren verschiedenen Zeitpunkten jeweils mittels des realen Sensors (13) reale Sensordaten (21) über die Umgebung (15) des realen Sensors (13) erzeugt werden,
wobei sich die Zeitpunkte im Hinblick darauf unterscheiden, welche Position und/oder Ausrichtung der reale Sensor (13) aufweist, welche realen Bezugsobjekte (17) sich in der Umgebung (15) befinden und/oder welche Position und/oder Ausrichtung die in der Umgebung (15) befindlichen realen Bezugsobjekte (17) jeweils aufweisen;
- dass das Modell (25) der Umgebung (15) für die verschiedenen Zeitpunkte jeweils aktualisiert wird, so dass das für den jeweiligen Zeitpunkt aktuelle Modell (25) einen dem realen Sensor (13) hinsichtlich seiner Position und Ausrichtung zu dem jeweiligen Zeitpunkt entsprechenden virtuellen Sensor (27) sowie für jedes der zu dem jeweiligen Zeitpunkt in der Umgebung (15) befindlichen realen Bezugsobjekte (17) ein dem jeweiligen realen Bezugsobjekt (17) hinsichtlich seiner Position und Ausrichtung zu dem jeweiligen Zeitpunkt entsprechendes virtuelles Bezugsobjekt (29) umfasst;
- dass für die verschiedenen Zeitpunkte jeweils anhand des für den jeweiligen Zeitpunkt aktuellen Modells (25) synthetische Sensordaten (33) über die Umgebung (15) erzeugt und annotiert werden; und
- dass jeweils auf Grundlage der für einen jeweiligen Zeitpunkt erzeugten und annotierten synthetischen Sensordaten (37) die zu dem jeweiligen Zeitpunkt erzeugten realen Sensordaten (21) annotiert werden.

11. Verfahren nach einem der vorstehenden Ansprüche,
wobei das Verfahren (11) umfasst:
- dass fortlaufend mittels des realen Sensors (13) reale Sensordaten (21) über die Umgebung (15) des realen Sensors (13) erzeugt werden;
- dass das Modell (25) der Umgebung (15) fortlaufend aktualisiert wird, so dass das jeweilige aktuelle Modell (25) einen dem realen Sensor (13) hinsichtlich seiner Position und Ausrichtung zu dem jeweiligen Zeitpunkt entsprechenden virtuellen Sensor (27) sowie für jedes der zu dem jeweiligen Zeitpunkt in der Umgebung (15) befindlichen realen Bezugsobjekte (17) ein dem jeweiligen realen Bezugsobjekt (17) hinsichtlich seiner Position und Ausrichtung zu dem jeweiligen Zeitpunkt entsprechendes virtuelles Bezugsobjekt (29) umfasst;
- dass fortlaufend anhand des jeweiligen aktuellen Modells (25) synthetische Sensordaten (33) über die Umgebung (15) erzeugt und annotiert werden; und
- dass fortlaufend auf Grundlage der jeweiligen annotierten synthetischen Sensordaten (37) die jeweiligen realen Sensordaten (21) annotiert werden.

12. Verfahren nach einem der vorstehenden Ansprüche,
wobei das Verfahren (11) ferner umfasst:
- dass auf die erzeugten realen Sensordaten (21) eine Objekterkennung angewandt wird; und
- dass mittels der Objekterkennung erkannte Objekte anhand der annotierten realen Sensordaten (39) entweder als einem jeweiligen der realen Bezugsobjekte (17) entsprechend oder als Sonderobjekt identifiziert werden.

13. Verfahren nach den Ansprüchen 11 und 12,
wobei das Anwenden der Objekterkennung und das genannte Identifizieren der erkannten Objekte fortlaufend erfolgen, und
wobei in Abhängigkeit davon, ob ein erkanntes Objekt als Sonderobjekt identifiziert worden ist und gegebenenfalls wo es sich innerhalb des Detektionsbereichs (19) und/oder relativ zu einem oder mehreren der realen Bezugsobjekte (17) befindet, eine Sicherheitsreaktion ausgelöst wird.

14. Computerprogrammprodukt, das auf einem computerlesbaren Datenträger gespeichert ist und Anweisungen umfasst, die, wenn sie auf einem Computersystem ausgeführt werden, ein Verfahren gemäß einem der vorstehenden Ansprüche ausführen.

15. Computerlesbarer Datenträger, auf dem das Computerprogrammprodukt gemäß Anspruch 14 gespeichert ist.

## Geänderte Patentansprüche

### Geänderte Patentansprüche gemäss Regel 137(2) EPÜ.

1. Verfahren (11) zum Erzeugen annotierter Sensordaten, das umfasst:
- dass mittels eines realen Sensors (13) reale Sensordaten (21) über eine Umgebung (15) des realen Sensors (13) erzeugt werden, in der sich ein oder mehrere reale Bezugsobjekte (17) befinden können;
- dass anhand eines Modell (25) der Umgebung (15), das einen virtuellen Sensor (27) umfasst, der dem realen Sensor (13) entspricht, sowie für jedes der in der Umgebung (15) befindlichen realen Bezugsobjekte (17) ein dem jeweiligen realen Bezugsobjekt (17) entsprechendes virtuelles Bezugsobjekt (29) umfasst, synthetische Sensordaten (33) über die Umgebung (15) erzeugt werden,
wobei die von dem realen Sensor (13) erzeugten realen Sensordaten (21) weder in das Modell (25) noch in die Erzeugung der synthetischen Sensordaten (33) anhand des Modells (25) einfließen;
- dass die synthetischen Sensordaten (33) anhand des Modells (25) im Hinblick darauf annotiert werden, ob sie sich auf eines der virtuellen Bezugsobjekte (29) beziehen; und
- dass auf Grundlage der annotierten synthetischen Sensordaten (37) die realen Sensordaten (21) insofern annotiert werden, als die Annotation der synthetischen Sensordaten (33) auf die realen Sensordaten (21) übertragen wird.

2. Verfahren nach Anspruch 1,
wobei das Erzeugen (41) der realen Sensordaten (21) umfasst,
- dass mittels des realen Sensors (13) für einen oder mehrere Messorte innerhalb eines Detektionsbereichs (19) des realen Sensors (13) jeweils ein Messwert gemessen wird und dass ein realer Sensordatensatz (23) erzeugt wird, der für jeden der Messorte einen dem jeweiligen Messort zugeordneten Dateneintrag mit dem für den jeweiligen Messort gemessenen Messwert umfasst.

3. Verfahren nach Anspruch 1 oder 2,
wobei das Erzeugen (47) der synthetischen Sensordaten (33) umfasst,
- dass anhand des Modells (25) ein synthetischer Sensordatensatz (35) erzeugt wird, der für einen oder mehrere Messorte innerhalb eines Detektionsbereichs (31) des virtuellen Sensors (27), der einem Detektionsbereich (19) des realen Sensors (13) entspricht, jeweils einen dem jeweiligen Messort zugeordneten Dateneintrag umfasst.

4. Verfahren nach den Ansprüchen 2 und 3,
wobei der reale Sensordatensatz (23) und der synthetische Sensordatensatz (35) einander hinsichtlich der Anzahl der Dateneinträge und/oder der Zuordnung der Dateneinträge zu einem jeweiligen Messort innerhalb des jeweiligen Detektionsbereichs (19 bzw. 31) entsprechen.

5. Verfahren nach zumindest den Ansprüchen 2 und 3,
wobei die synthetischen Sensordaten (33) derart erzeugt werden, dass der Detektionsbereich (31) des virtuellen Sensors (27) durch die genannte Zuordnung der Dateneinträge des synthetischen Sensordatensatzes (35) zu den Messorten innerhalb des Detektionsbereichs (31) des virtuellen Sensors (27) in entsprechender Weise auf den synthetischen Sensordatensatz (35) abgebildet wird, wie der Detektionsbereich (19) des realen Sensors (13) durch die genannte Zuordnung der Dateneinträge des realen Sensordatensatzes (23) zu den Messorten innerhalb des Detektionsbereichs (19) des realen Sensors (13) auf den realen Sensordatensatz (23) abgebildet wird.

6. Verfahren nach einem der Ansprüche 3 bis 5,
wobei das Annotieren (49) der synthetischen Sensordaten (33) umfasst,
- dass anhand des Modells (25) für jeden Dateneintrag des synthetischen Sensordatensatzes (35) ein in Abhängigkeit davon, ob sich der Messort, dem der jeweilige Dateneintrag zugeordnet ist, an einem der virtuellen Bezugsobjekte (29) befindet, ermittelter Annotationswert zugewiesen wird.

7. Verfahren nach Anspruch 6,
wobei die realen Bezugsobjekte (17) jeweils zu einer von gegebenenfalls mehreren vorgegebenen Objektklassen gehören,
wobei das Modell (25) für jedes der virtuellen Bezugsobjekte (29) Information darüber umfasst, zu welcher der Objektklassen das reale Bezugsobjekt (17) gehört, dem das jeweilige virtuelle Bezugsobjekt (29) entspricht, und wobei der Annotationswert, wenn sich der Messort, dem der jeweilige Dateneintrag zugeordnet ist, an einem der virtuellen Bezugsobjekte (29) befindet, in zusätzlicher Abhängigkeit davon ermittelt wird, zu welcher der Objektklassen das reale Bezugsobjekt (17) gehört, dem dieses virtuelle Bezugsobjekt (29) entspricht.

8. Verfahren nach zumindest den Ansprüchen 2, 3 und 6,
wobei das Annotieren (51) der realen Sensordaten (21) umfasst,
- dass jedem Dateneintrag des realen Sensordatensatzes (23) ein Annotationswert zugewiesen wird, der auf dem Annotationswert oder den Annotationswerten eines oder mehrerer dem jeweiligen Dateneintrag entsprechender Dateneinträge des annotierten synthetischen Sensordatensatzes (37) beruht.

9. Verfahren nach zumindest den Ansprüchen 2, 3, 4 und 6,
wobei das Annotieren (51) der realen Sensordaten (21) umfasst,
- dass jedem Dateneintrag des realen Sensordatensatzes (23) der Annotationswert des entsprechenden Dateneintrags des annotierten synthetischen Sensordatensatzes (37) zugewiesen wird.

10. Verfahren nach einem der vorstehenden Ansprüche,
wobei das Verfahren (11) umfasst:
- dass zu mehreren verschiedenen Zeitpunkten jeweils mittels des realen Sensors (13) reale Sensordaten (21) über die Umgebung (15) des realen Sensors (13) erzeugt werden,
wobei sich die Zeitpunkte im Hinblick darauf unterscheiden, welche Position und/oder Ausrichtung der reale Sensor (13) aufweist, welche realen Bezugsobjekte (17) sich in der Umgebung (15) befinden und/oder welche Position und/oder Ausrichtung die in der Umgebung (15) befindlichen realen Bezugsobjekte (17) jeweils aufweisen;
- dass das Modell (25) der Umgebung (15) für die verschiedenen Zeitpunkte jeweils aktualisiert wird, so dass das für den jeweiligen Zeitpunkt aktuelle Modell (25) einen dem realen Sensor (13) hinsichtlich seiner Position und Ausrichtung zu dem jeweiligen Zeitpunkt entsprechenden virtuellen Sensor (27) sowie für jedes der zu dem jeweiligen Zeitpunkt in der Umgebung (15) befindlichen realen Bezugsobjekte (17) ein dem jeweiligen realen Bezugsobjekt (17) hinsichtlich seiner Position und Ausrichtung zu dem jeweiligen Zeitpunkt entsprechendes virtuelles Bezugsobjekt (29) umfasst;
- dass für die verschiedenen Zeitpunkte jeweils anhand des für den jeweiligen Zeitpunkt aktuellen Modells (25) synthetische Sensordaten (33) über die Umgebung (15) erzeugt und annotiert werden; und
- dass jeweils auf Grundlage der für einen jeweiligen Zeitpunkt erzeugten und annotierten synthetischen Sensordaten (37) die zu dem jeweiligen Zeitpunkt erzeugten realen Sensordaten (21) annotiert werden.

11. Verfahren nach einem der vorstehenden Ansprüche,
wobei das Verfahren (11) umfasst:
- dass fortlaufend mittels des realen Sensors (13) reale Sensordaten (21) über die Umgebung (15) des realen Sensors (13) erzeugt werden;
- dass das Modell (25) der Umgebung (15) fortlaufend aktualisiert wird, so dass das jeweilige aktuelle Modell (25) einen dem realen Sensor (13) hinsichtlich seiner Position und Ausrichtung zu dem jeweiligen Zeitpunkt entsprechenden virtuellen Sensor (27) sowie für jedes der zu dem jeweiligen Zeitpunkt in der Umgebung (15) befindlichen realen Bezugsobjekte (17) ein dem jeweiligen realen Bezugsobjekt (17) hinsichtlich seiner Position und Ausrichtung zu dem jeweiligen Zeitpunkt entsprechendes virtuelles Bezugsobjekt (29) umfasst;
- dass fortlaufend anhand des jeweiligen aktuellen Modells (25) synthetische Sensordaten (33) über die Umgebung (15) erzeugt und annotiert werden; und
- dass fortlaufend auf Grundlage der jeweiligen annotierten synthetischen Sensordaten (37) die jeweiligen realen Sensordaten (21) annotiert werden.

12. Verfahren nach einem der vorstehenden Ansprüche,
wobei das Verfahren (11) ferner umfasst:
- dass auf die erzeugten realen Sensordaten (21) eine Objekterkennung angewandt wird; und
- dass mittels der Objekterkennung erkannte Objekte anhand der annotierten realen Sensordaten (39) entweder als einem jeweiligen der realen Bezugsobjekte (17) entsprechend oder als Sonderobjekt identifiziert werden.

13. Verfahren nach den Ansprüchen 11 und 12,
wobei das Anwenden der Objekterkennung und das genannte Identifizieren der erkannten Objekte fortlaufend erfolgen, und
wobei in Abhängigkeit davon, ob ein erkanntes Objekt als Sonderobjekt identifiziert worden ist und gegebenenfalls wo es sich innerhalb des Detektionsbereichs (19) und/oder relativ zu einem oder mehreren der realen Bezugsobjekte (17) befindet, eine Sicherheitsreaktion ausgelöst wird.

14. Computerprogrammprodukt, das auf einem computerlesbaren Datenträger gespeichert ist und Anweisungen umfasst, die, wenn sie auf einem Computersystem ausgeführt werden, ein Verfahren gemäß einem der vorstehenden Ansprüche ausführen.

15. Computerlesbarer Datenträger, auf dem das Computerprogrammprodukt gemäß Anspruch 14 gespeichert ist.
